# EUROPÄISCHE PATENTANMELDUNG

(11) **EP 1 671 564 A1**
(43) Veröffentlichungstag der Anmeldung: **21.06.2006**
(21) Anmeldenummer: 05027328.3
(22) Anmeldetag: 14.12.2005
(51) Int. Cl.: A47G 19/02, A47J 39/02, A47J 36/28, C09K 5/06, F28D 20/02

(54) **Mobile Wärmescheibe**

(30) Priorität: 15.12.2004 DE 102004061502
(71) Anmelder: Kliewe, Martina, 14129 Berlin (DE)
(72) Erfinder: Kliewe, Martina, 14129 Berlin (DE)

(57) **Zusammenfassung**

Der Erfindung liegt die Aufgabe zugrunde, eine verbesserte sowie leicht und schnell handhabbare Wärme- und/oder Warmhaltevorrichtung für handelsübliches Speisegeschirr zu schaffen, welche die Nachteile des Stands der Technik vermeidet und letzteren zum individuellen energiefremdanschlussfreien Gebrauch weiterentwickelt.

Diese Aufgabe wird durch eine Vorrichtung und eine Verfahren gelöst, welche dazu dienen selbsthaftend glatte Flächen wie Speiseteller auf "unsichtbare" Weise während des Genusses warmzuhalten.

Die Vorrichtung besteht hierbei aus einem flexiblen scheibenförmigen Wärmespeicher (1), dessen Ummantelung (10) einer abgeschlossenen und wärmeübertragenden Kunststofftasche entspricht, genannt Wärmescheibe (1), welche mit Natriumacetat (8)zur reversiblen Erzeugung von Kristallisationswärme gefüllt ist. Zur Auslösung des Kristallisationsvorgangs ist ferner ein biegbares Metallplättchen (7) enthalten, welches seinerseits mit dem in der Ummantelung (10) eingearbeiteten Befestigungsmittel (2), vorzugsweise eines mittig angeordneten Saugnapfes (2), in Verbindung steht.

Befestigt man nun mittels Andrücken des Saugnapfs (2) die somit ausgelöste Wärmescheibe (1) im Hohlraum eines Tellerbodens, wird der Speiseteller sowie dessen Inhalt breitflächig erwärmt bzw. für mindestens eine halbe Stunde warmgehalten.

## Beschreibung

Die vorliegende Erfindung bezieht sich auf eine Vorrichtung und ein Verfahren zum Erwärmen und/oder Warmhalten u.a. von Speisegeschirr, welche für den Gast unsichtbar sowohl zentral in der Mitte des Tisches einer Tafel, als auch individuell am Platze eines jeden Gastes eingesetzt werden können und welche die Speisen während des Genusses warm halten.

Es sind Warmhaltevorrichtungen bekannt u.a. in Form von Hauben; elektrisch beheizten Warmhalteplatten; Warmhalteplatztellern mittels eingelegter Akkus (DE 90 01 003 U1), bzw. mit einer elektrisch beheizbaren Wärmekammer (DE 78 25 036 U1) oder einer mit heißem Wasser befüllbaren Wärmekammer (DE 86 11 572 U1). Desweiteren gibt es Teller mit doppeltem Boden zur Befüllung mit heißem Wasser; Teller mit doppeltem Boden zur Bestückung mit einer Wärmescheibe (DE 196 17 334 A1); Teller, die ihren Wärmespeicher mittels einer wärmeisolierenden Platte am Tellerboden fixieren (DE 101 07 922 A1), sowie Teller, die mit einer aus magnetischem Werkstoff bestehenden Folie bestückt sind, an welcher dann ein wärmender Magnet befestigt werden kann.

Aus verschiedenen Gründen befriedigen die eben beschriebenen Vorrichtungen den Benutzer nicht in ausreichendem Maße. Zum einen ist der apparative Aufwand sehr hoch und die Wärmeübertragung bzw. Wärmeerhaltung selbst bei vorgewärmten Tellern im Verhältnis zu gering. Desweiteren sind Spezialanfertigungen bzw. - präparierungen von Geschirr nötig, die bei üblichem Gebrauch auf Grund ihrer Hohlräume bzw. Beschichtungen leicht Schaden nehmen und ebenso das Thema der Hygiene offen lassen, von einer aufwendigen Produktion ganz abgesehen. Schließlich ist der Benutzer an eine bestimmte Form der Tischgestaltung gebunden (Platzteller, Warmhalteplatten) und da nicht zuletzt die Frage der Ästhetik sowie die freie Wahl des Tafelservice bei einem liebevoll zubereiteten Mahl eine wichtige Rolle spielen, sind hier die Möglichkeiten sehr eingeschränkt.

Der vorliegenden Erfindung liegt daher die Aufgabe zugrunde, eine verbesserte sowie leicht und schnell handhabbare Wärme- und/oder Warmhaltevorrichtung für handelsübliches Speisegeschirr zu schaffen, welche die Nachteile des Standes der Technik vermeidet und letzteren effizient und auf kostengünstige Weise zum individuellen Gebrauch weiterentwickelt.

Erfindungsgemäß wird diese Aufgabe durch eine Warmhaltevorrichtung nach Anspruch 1 gelöst. Bevorzugte Ausgestaltungen der Erfindung sind Gegenstand der Unteransprüche.

### Erfindungsgemäß wird diese Aufgabe nun wie folgt gelöst:

Es wird eine Vorrichtung und ein Verfahren beschrieben, welche dazu dienen, durch unkomplizierte und sichere Handhabung energiefremdanschlußfrei und selbsthaftend glatte Flächen auf "unsichtbare" Art und Weise zu erwärmen und/oder warmzuhalten.

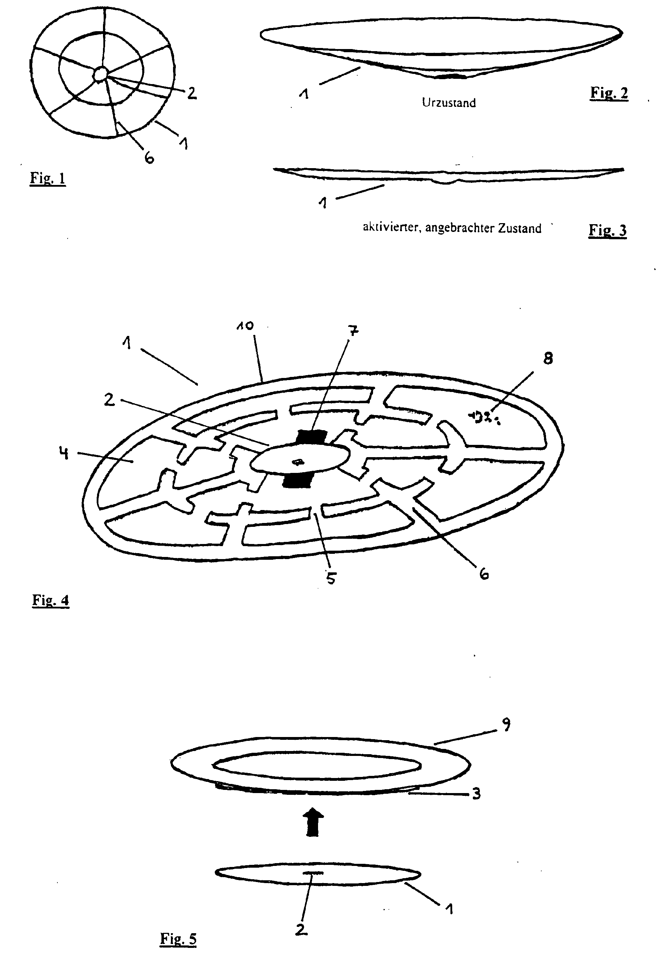

Die Erfindung wird nachfolgend unter Bezugnahme auf die Figuren 1 bis 5 in einer beispielhaften Ausführungsform beschrieben, wobei die Darstellungen in den Figuren vereinfacht und teilweise schematisch sind.

Die Vorrichtung besteht hierbei aus einem vorzugsweise flexiblen, scheibenförmigen Wärmespeicher, dessen Ummantelung 10 einer abgeschlossenen und wärmeübertragenden Kunststofftasche entspricht, genannt Wärmescheibe 1. Die Wärmescheibe 1 ist gegebenenfallls zur Förderung der Stabilität und um enges Anliegen an der zu erwärmenden Fläche zu ermöglichen, in ringförmig angeordnete Kammern 4 aufgeteilt, welche ihrerseits durch Kanäle 5 miteinander verbunden sind. Die durch die Abtrennung der Kammern 4 entstehenden doppeltstarken PVC-Schweißnähte 6 od. "Gräten" würden somit als Form und Festigkeit gebendes, jedoch flexibles Gerüst für die Wärmescheibe 1 dienen, wodurch eine breitflächige und direkte Anhaftung dauerhaft gewährleistet ist. Die Schweißnähte (6) bilden also ein insgesamt stabilisierendes Gerüst der Wärmescheibe (1). Die Wärmescheibe 1 wird mittels verschiedener zur Auswahl stehender wiederablösbarer und hitzebeständiger Befestigungsmittel 2, wie insbesondere eines od. mehrerer eingearbeiteter Saugnäpfe 2, mit der zu erwärmenden bzw. warmzuhaltenden Fläche direkt in Kontakt gebracht. Die Wärmescheibe (1) kann in ihrer Gestalt auch eine Weiterführung der Form eines zentral angeordneten Saugnapfes sein.

Die Wärmescheibe 1 ist mit einer reversiblen Kristallisationswärme erzeugenden und wärmespeichernden Lösung 8, vorzugsweise einer ungiftigen Natriumacetatlösung, gefüllt und enthält ferner ein vorzugsweise am Saugnapf angeordnetes biegbares und rostfreies Metallplättchen 7, welches beim Vorgang der Befestigung an/unter der zu erwärmenden Fläche durch Druck als Auslöseelement für den Kristallisationsvorgang dient, wodurch Kristallisationswärme erzeugt wird, die eine Erwärmung bzw. Warmhaltung der Fläche für mind. eine halbe Stunde garantiert.

Die Wärmescheibe 1 kann grundsätzlich von beliebigem Durchmesser und von beliebiger Höhe sein, jedoch sollte sie für den Gebrauch an Speisegeschirr in ihrem Durchmesser innerhalb der Fläche des durch den Aufstehring enstehenden Hohlraums 3 möglichst flächendeckend anbring- und aktivierbar sein, sowie ebenfalls eine Höhe von ca. 2-3 mm in aktiviertem Zustand nicht überschreiten, damit einerseits der Teller nicht wackelt und die Wärmescheibe vollständig verborgen bleibt, und zum anderen eine empfindliche Tischoberfläche durch direkten Kontakt keinen Schaden nimmt. Das erwähnte Speisegeschirr umfasst neben Tellern auch Tassen, Kannen und dergleichen.

Das Verfahren zum Gebrauch dieser selbsthaftenden Wärmescheibe sei hier am Beispiel eines Speisetellers 9 erläutert: man befestigt mittels andrücken des Saugnapfs 2 die somit ausgelöste Wärmescheibe 1 in dem durch den Aufstehring gebildeten Hohlraum an der Unterseite des Tellers 3, wodurch der Teller 9 sowie dessen Inhalt breitflächig erwärmt bzw. warmgehalten wird. Nach Gebrauch ist die Wärmescheibe 1 leicht vom Speisegeschirr 9 zu lösen, wobei durch das Lösen des Saugnapfs 2 ebenfalls das mit dem Saugnapf verbundene Metallplättchen 7 in seinen Urzustand versetzt wird und somit zur erneuten Auslösung bereit ist. Durch kurzes Kochen der Wärmescheibe 1 wird die wärmespeichernde Lösung 8 wieder in ihren Urzustand versetzt, womit nun die gesamte Wärmescheibe 1 zur hygienischen Wiederverwendung bereit ist.

Dieser Vorgang lässt sich mind. 200 Mal bei gleichbleibender Leistung wiederholen. Den optimalen Effekt erhält man, wenn vorgewärmte Teller/Platten/Schalen, privat im Ofen, gastronomisch im "Salamander", mit der Wärmescheibe bestückt werden. Für den Gebrauch an Speisegeschirr empfiehlt es sich ferner, die Wärmescheibe in zwei Größen anzufertigen, vorzugsweise mit einem Durchmesser von 6 und 11 cm (in aktiviertem Zustand), um mit geringstem Aufwand eine möglichst vielseitige Verwendung zu ermöglichen.

Die vorteilhaften Wirkungen der Erfindung ergeben sich hierbei im Wesentlichen durch die Selbsthaftung der Wärmescheibe und deren automatische Auslösung bei der Anbringung, wodurch die Wärmescheibe sekundenschnell und sicher einsatzbereit ist, ohne zusätzliche Vorbereitungs- und Montagezeit. Weiterhin ist mit dieser Neuerung durch das breitflächige und direkte Anliegen der Wärmescheibe an der zu wärmenden Fläche die bisher bestmögliche Wärmeübertragung u. - speicherung gegeben.

Weitere vorteilhafte Wirkungen sind die individuelle und "unsichtbare" Verwendbarkeit an jedem handels- u. gebrauchsüblichen Geschirr, wodurch die Ästhetik und persönliche Gestaltungsvorlieben keinerlei Einschränkung mehr erfahren und was Spezialanfertigungen von Geschirr überflüssig macht. Durch ihr leichtes Gewicht entsteht beim Servieren kein Mehraufwand. Die Wärmescheibe ist aus vertrautem, preiswertem Material hergestellt, was eine kostensparende und serienmäßige Herstellung begünstigt. Die Anbringung des Metallplättchens am Saugnapf erspart zusätzlich die Herstellung eines aufwendigeren Auslöseelements (wie in der DE 100 64 288 C2 beschrieben), welches normalerweise für die erneute Verwendung der Wärmescheibe wichtig wäre und dadurch sogar einen zusätzlichen Arbeitsgang, da hier Auslösung und Anbringen der Wärmescheibe in einem Vorgang getätigt werden.

Die gewerbliche Nutzung ist hier einerseits für die gehobene Gastronomie, für Gartenlokale sowie für Catering-Services interessant, ebenso wie für die Versorgung in Krankenhäusern, Pflegeheimen und bei der Betreuung von Kleinkindern. Zum anderen besteht gleichfalls ein Interesse der privaten Haushalte am Kauf dieser Wärmescheibe, z.B. im täglichen Gebrauch, bei Feiern und Einladungen, beim Grillen oder Campen.

Ferner lässt sich die Wärmescheibe auch anderweitig verwenden, z.B. zum Auftauen von zugefrorenen Autoscheiben, wobei sie in ihrer Leistung jegliche Lüftung übertreffen wird. Hierbei kann die Wärmescheibe (1) flach und in ihrer äußeren Form derart ausgebildet sein, dass sie mittels der Befestigungsmittel (2) an Fensterscheiben, insbesondere Autoscheiben, oder dergleichen anbringbar ist. Ferner kann die Wärmevorrichtung auch zum Kühlen von Speisegeschirr verwendet werden, wenn man die Wärmescheibe in ausgelöstem Zustand zuvor ins Gefrierfach gelegt hat.

Die kostengünstige Herstellung und die dadurch im Verhältnis zum Nutzen preisgünstige Möglichkeit der Veräußerung macht die Wärmescheibe für Hersteller und Verbraucher gleichermaßen attraktiv.

Selbstverständlich wird die vorstehende detaillierte Beschreibung nur zur Veranschaulichung angegeben, und es können viele Variationen gemacht werden, ohne vom Geist der Erfindung abzuweichen.

Zusammenfassend liegt der Erfindung also die Aufgabe zugrunde, eine verbesserte sowie leicht und schnell handhabbare Wärme- und/oder Warmhaltevorrichtung für handelsübliches Speisegeschirr zu schaffen, welche die Nachteile des Stands der Technik vermeidet und letzteren zum individuellen energiefremdanschlussfreien Gebrauch weiterentwickelt.

Diese Aufgabe wird durch eine Vorrichtung und eine Verfahren gelöst, welche dazu dienen selbsthaftend glatte Flächen wie Speiseteller auf "unsichtbare" Weise während des Genusses warmzuhalten.

Die Vorrichtung besteht hierbei aus einem flexiblen scheibenförmigen Wärmespeicher (1), dessen Ummantelung (10) einer abgeschlossenen und wärmeübertragenden Kunststofftasche entspricht, genannt Wärmescheibe (1), welche mit Natriumacetat (8)zur reversiblen Erzeugung von Kristallisationswärme gefüllt ist. Zur Auslösung des Kristallisationsvorgangs ist ferner ein biegbares Metallplättchen (7) enthalten, welches seinerseits mit dem in der Ummantelung (10) eingearbeiteten Befestigungsmittel (2), vorzugsweise eines mittig angeordneten Saugnapfes (2), in Verbindung steht.

Befestigt man nun mittels Andrücken des Saugnapfs (2) die somit ausgelöste Wärmescheibe (1) im Hohlraum eines Tellerbodens, wird der Speiseteller sowie dessen Inhalt breitflächig erwärmt bzw. für mindestens eine halbe Stunde warmgehalten.

### Bezugszeichen

- Wärmescheibe: 1
- Befestigungsmittel: 2
- Hohlraum am Tellerboden: 3
- Kammern: 4
- Kanäle: 5
- Schweißnähte: 6
- Metallplättchen als Auslöseelement: 7
- Wärmeerzeugende / -speichernde Lösung: 8
- Teller: 9
- Ummantelung: 10

## Patentansprüche

1. Mobile Wärmescheibe (1) mit einer in einer Ummantelung (10) angeordneten wärmeerzeugenden / wärmespeichernden Substanz (8) sowie einem Auslöseelement (7), **dadurch gekennzeichnet, dass** an der Ummantelung (10) mindestens ein Befestigungsmittel (2) zur lösbaren Befestigung der Wärmescheibe (1) an einem Gegenstand angeordnet ist.

2. Mobile Wärmescheibe nach Anspruch 1, **dadurch gekennzeichnet, dass** das Befestigungsmittel (2) an der Ummantelung (10) angeformt oder befestigt oder eingearbeitet ist.

3. Mobile Wärmescheibe nach Anspruch 1 oder 2, **dadurch gekennzeichnet, dass** die Ummantelung (10) eine Kunststofftasche ist.

4. Mobile Wärmescheibe nach einem der Ansprüche 1 bis 3, **dadurch gekennzeichnet, dass** das Auslöseelement (7) derart mit dem Befestigungsmittel (2) verbunden ist, dass es mit dem Befestigungsmittel (2) betätigbar ist.

5. Mobile Wärmescheibe nach einem der vorhergehenden Ansprüche, **dadurch gekennzeichnet, dass** die Wärmescheibe (1) reversibel benutzbar ausgebildet ist.

6. Mobile Wärmescheibe nach einem der voranstehenden Ansprüche, **dadurch gekennzeichnet, dass** das Auslöseelement (7) ein biegbarer dünner Streifen aus Metall, vorzugsweise Stahl, ist.

7. Mobile Wärmescheibe nach einem der voranstehenden Ansprüche, **dadurch gekennzeichnet, dass** die Wärmescheibe (1) in ihrer äußeren Form derart ausgebildet ist, dass sie mit in Gebrauchsgeschirr ausgeformten Hohlräumen (3) korrespondiert oder/und dass sie mittels der Befestigungsmittel (2) an Fensterscheiben anbringbar ist.

8. Mobile Wärmescheibe nach einem der voranstehenden Ansprüche, **dadurch gekennzeichnet, dass** die Wärmescheibe (1) in Kammern (4) geteilt ist, welche mit dem Auslöseelement (7) in Verbindung stehen.

9. Mobile Wärmescheibe nach Anspruch 8, **dadurch gekennzeichnet, dass** die Kammern (4) durch Kanäle (5) miteinander verbunden sind.

10. Mobile Wärmescheibe nach Anspruch 8 oder 9, **dadurch gekennzeichnet, dass** die Kammern (4) die wärmeerzeugende / wärmespeichernde Substanz (8), insbesondere Natriumacetat, enthalten.
